# EUROPEAN PATENT SPECIFICATION

(11) **EP 3 075 461 B1**
(45) Date of publication and mention of the grant of the patent: **21.08.2019**
(21) Application number: 16150861.9
(22) Date of filing: 09.11.2011
(51) Int. Cl.: B08B 9/20, B08B 9/30, B08B 9/42, B67B 7/00, B67C 7/00, B67B 3/22, B67B 7/14

(54) **AUTOMATIC BOTTLE WASH-UP LINE AND METHOD**
AUTOMATISCHE FLASCHENWASCHLINIE UND VERFAHREN
LIGNE AUTOMATIQUE DE LAVAGE DE BOUTEILLES ET PROCÉDÉ

(30) Priority: 06.12.2010 SE 1051284
(43) Date of publication of application: 05.10.2016
(62) Divisional of application: 11188420.1
(73) Proprietor: Getinge Sterilization AB, 305 05 Getinge (SE)
(72) Inventor: NILSSON, Magnus, 274 62 Rydsgård (SE)
(74) Representative: Valea AB

(56) References cited:
- WO-A2-2010/140048
- DE-A1-102008 046 608
- IT-A1- UD20 090 113
- JP-A- 6 050 980
- US-A- 3 058 276

## Description

### Field of the Invention

The present invention relates to an automatic bottle wash-up line and more specifically to a method and to a means for handling drinking bottles having nipples intended for laboratory animals in an automatic bottle wash-up line.

### Background

Drinking bottles for laboratory animals are provided with nipples. The spout of the nipple can have different lengths.

In order to obtain a rational handling the drinking bottles are today placed in baskets, the baskets are placed on carriages and the carriages are transported to a bottle wash-up line. The baskets are placed on a conveyor, the nipples are dismounted from the bottles and are placed in a separate basket adapted to the nipples, which is then also placed on the conveyor. Bottles and nipples are washed and dried in a washing machine, whereupon the bottles are filled with water and the nipples are again mounted on the bottles.

The above process is a rather circumstantial procedure and the capacity of the plant is limited because bottles and nipples are washed in separate baskets and the baskets intended for the nipples have to be returned to the bottle wash-up filling station.

The document IT UD20090113 A1 discloses a method and a means for handling of drinking bottles provided with nipples in an automatic bottle wash-up line. In accordance with this document, the nipples on all the bottles are removed from the respective bottle, collected in a box and washed. The basket with the bottles retained therein is turned upside down, inserted into a washing machine wherein the bottles are washed and dried. The basket is then turned back into the original position with the bottles having their bottle mouth upwards, the bottles are filled with a liquid, and then the nipples are attached on the bottles.

### The invention

In view of the above, one object of the invention is to provide a method of washing-up bottles and nipples together in an efficient way and to eliminate the need of separate baskets for the nipples.

This object is achieved according to the invention with the features according to claim 1.

Another object of the invention is to provide a means which makes it possible to perform the method according to the invention.

This object is achieved according to the invention with the features according to the independent claim 4. Developments and preferred embodiments of the means according to the invention are made the object of the subsequent sub claims.

### Short description of the drawings

The invention will be described more in detail with reference to one embodiment of the invention shown in the drawings, on which:
Fig. 1 schematically shows a bottle wash-up line for drinking bottles for laboratory animals according to the invention, and
Fig. 2 - 5 schematically show a tool being part of a means for nipple removal and nipple reassembly, respectively, in different working positions.

### Detailed description of the Invention

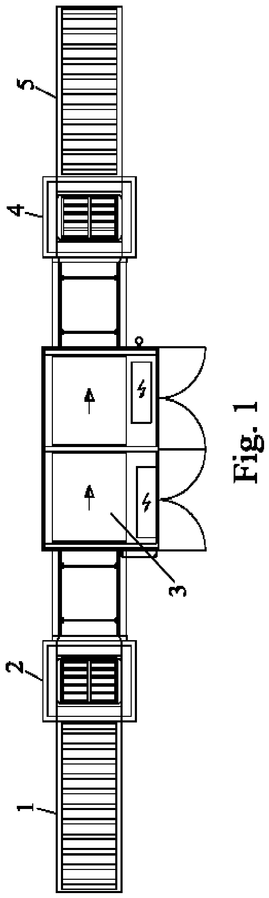

An automatic bottle wash-up line for performing of the method according to the present invention is shown schematically in Fig.1. This bottle wash-up line is primarily intended for washing of drinking bottles for laboratory animals. The bottles can have different sizes. The bottles are transported in bottle baskets within the plant. A suitable basket content would be 18 bottles (3 x 6). This number can vary, but all baskets in one plant should contain the same number of bottles, irrespective of any variations in size of the bottles.

According to the invention, a back side of the baskets is designed to accommodate nipples removed from the bottles and to retain said nipples during the washing procedure.

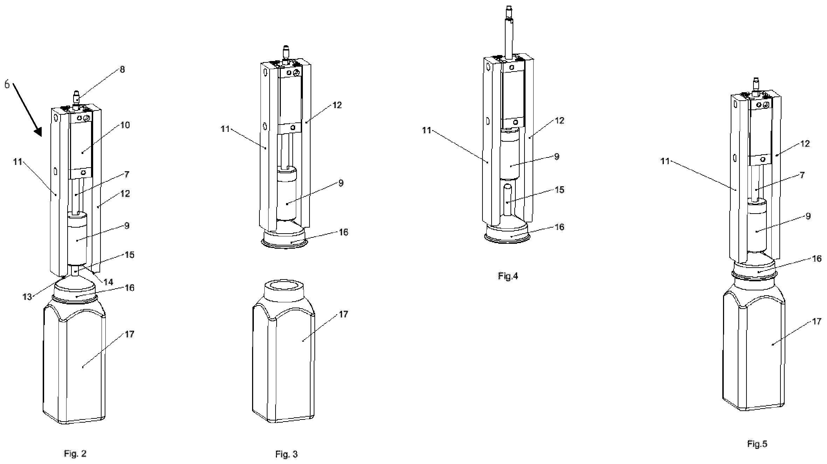

The bottle baskets are transported on a conveyor 1 through the plant. When a basket is placed on the conveyor, it first encounters a nipple removal means 2 comprising a number of tools corresponding to the number of bottles in a basket. This tool will be described more in detail with reference to the subsequent Figs. 2 - 5.

In the nipple removal means 2 the nipples are removed from the bottles and are lifted up from the basket, whereupon the basket is turned upside down and the bottles are emptied of any remaining content. Subsequently the nipples are placed on the backside of the basket, now facing upwards, in brackets for compartments designed for this purpose.

Thereafter the basket advances into a washing machine 3, which will not be described in detail in this context, as it is not a part of the present invention. The bottles are washed and dried and are subsequently fed out to a nipple reassembly means 4.

The nipple reassembly means 4 comprises tools similar to the tools of the nipple removal means. Each tool is controlled to lift one of the washed and dried nipples up from the backside of the basket, whereupon the basket is turned back to the original position, the bottles are filled with water, and finally the nipples being held by the tools, are reassembled onto the bottles. Thereafter the baskets are transported out of the plant on a conveyor 5 containing filled-up bottles with mounted nipples.

The tools comprised in the nipple removal and nipple reassembly means 2, 3 are working with compressed air as will be described below. One of the tools is shown in different positions in Figs. 2 - 5.

A predetermined number of tools 6 are arranged in a bracket not shown in detail, which is movable in a vertical direction. The tool has a hollow shaft 7 with a connection 8 for compressed air at an upper end and a mouthpiece 9 at the opposite, free end. The shaft 7 sits in an associated operating cylinder 10, which, in a controlled fashion, moves the shaft in the axial directions between an upper and a lower end position. Further, abutments 11, 12 are arranged, extending in parallel with the shaft and having abutment surfaces 13, 14 at the level of the lower end of the mouthpiece, when the shaft is in the lower end position.

The mouthpiece is designed in such a way that when a spout 15 of a nipple 16 is inserted into the mouthpiece, the nipple with spout remains hanging from the mouthpiece and is lifted up together with the tool, when the tool bracket is lifted up. This can be achieved e.g. with an O-ring arranged inside the mouthpiece 9, which O-ring has a sealing as well as a securing function.

The shaft 7 is connected to a source of compressed air. When a nipple is to be removed from the drinking bottle 17 the mouthpiece is passed over the spout, the nipple is released through a blow of compressed air through the shaft down into the drinking bottle, whereupon the tool bracket is lifted up with the nipples hanging in the mouthpieces. This position is shown in Fig. 3.

When the nipples have been removed from the bottles, see Fig. 3, the bottle basket is turned upside down, and then the tools are lowered down towards the back side of the basket. Subsequently, the shaft is moved with the aid of the cylinder away from the bottle basket, whereby the spout of the nipple is drawn out of the mouthpiece when the nipple is stopped by the abutment surfaces of the abutments, as is illustrated in Fig. 4. The abutments used to illustrate the invention are only one embodiment. They may be integrated in a plate, which is common for all tools.

In the nipple reassembly means the nipples are picked up by the tools in a way corresponding to what is shown in Figs. 2 and 3, but with the difference that the nipples then are picked up from the back side of the bottle basket, where they have been washed and dried. After that the bottle basket has been turned the right way up and the drinking bottles have been filled up with drinking water, the tool bracket with the tools is lowered, the nipples 16 are pressed onto the bottles 17 with the aid of the abutments, which is indicated in Fig. 5, whereupon the mouthpieces 9 are removed from the spouts of the nipples, in the same way as is shown in Fig. 4 and disclosed in connection therewith, with the difference that the nipples are now sitting on the drinking bottles.

The bottle baskets can be designed in any suitable way with the provision that the bottles shall be detained therein when the baskets are turned upside down, and that there is room for the nipples on the backsides of the baskets.

The technical solutions relating the bottle wash-up line as well as means for turning and transporting of the baskets in the bottle wash-up line are not part of the present invention, and therefore detailed descriptions of these have been omitted.

The exact configuration of the separate tools and the abutments can be varied without departing from the scope of the invention which is defined by the appended claims, and the embodiment disclosed in the detailed specification and shown in the drawings is only intended to illustrate the invention.

## Claims

1. A method for handling of drinking bottles (17) provided with nipples (16) in an automatic bottle wash-up line, in which the bottles with nipples arranged in a basket adapted for this purpose are placed on a conveyor for transport of said basket through a bottle wash-up line, wherein
the nipples (16) on all the bottles (17) in the basket are removed from the bottles in one operation by sealingly attaching a mouthpiece (9) to each nipple (16), whereupon the nipples are removed from the respective bottle by a blow of compressed air through said mouthpiece, and are lifted up from the bottles,
the basket is turned upside down with the bottles (17) retained in the basket,
the nipples (16) are placed on the back side of the basket, the basket is inserted into a washing machine (3) wherein bottles and nipples are washed and dried,
the nipples (16) are lifted up from the basket,
the basket is turned back into the original position with the bottles (17) having their bottle mouth upwards,
the bottles (17) are filled with a liquid, and then the nipples (16) are attached on the bottles (17).

2. The method according to claim 1, whereby said liquid is water.

3. The method according to any one of the claims 1 or 2, wherein said drinking bottle is a laboratory animal drinking bottle.

4. A means for handling drinking bottles (17) provided with nipples (16) in an automatic bottle wash-up line, **characterized in that** it comprises a nipple removal means (2) and a nipple reassembly means (4), the nipple removal means (2) having a number of tools (6) corresponding to the number of drinking bottles (17) in a basket, the tools (6) being arranged in such a way that each tool can be brought into engagement with a nipple (16) on one of the bottles in the basket, a means for turning the basket upside down, a backside of the basket being arranged to contain the nipples (16) during washing and drying, and means for introducing the basket into a washing machine (3), and wherein the nipple reassembly means (4) has tools (6) corresponding to the tools (6) of the nipple removal means (2) for engagement with and lifting up of the nipples (16) from the back side of the basket, and attaching of the nipples to the bottles (17), a means for turning the basket and a means for filling the bottles with a liquid before attachment of the nipples.

5. The means according to claim 4, **characterized in that** each tool (6) comprises a mouthpiece (9) being designed to be brought into sealing engagement with a spout (15) of a nipple (16) .

6. The means according to claim 5, **characterized in that** the mouthpiece (9) is connected to a source of compressed air.

7. The means according to claim 6, **characterized in that** the tool (6) comprises a hollow spindle (7) which is movable in axial directions between an upper and a lower end position with the aid of an operating cylinder, a connection (8) for a source of compressed air being arranged at one end of the spindle, and the mouthpiece (9) being arranged at the other end thereof.

8. The means according to claim 7, **characterized in that** a seal is arranged in the mouthpiece (9), such as an O-ring, which surrounds a spout (15) inserted into the mouthpiece (9), and thereby is arranged to apply a sufficient pressure against the spout to retain the spout (15) and the accompanying nipple (16), when the nipple has been released from a drinking bottle (17).

9. The means according to claim 7 or 8, **characterized in that** the tool (6) comprises abutments (11, 12) med abutment surfaces (13, 14) situated substantially at the level of a lower edge of the mouthpiece (9), when said spindle (7) is in its lower end position, whereby the mouthpiece (9) can be released from a nipple (16) by axial movement of the spindle (7) from its lower end position towards its upper end position.

10. The means according to any one of the claims 4-9, wherein said drinking bottle is a laboratory animal drinking bottle.

## Patentansprüche

1. Verfahren zur Handhabung von Trinkflaschen (17), die mit Saugern (16) versehen sind, in einer automatischen Flaschenwaschanlage, wobei die in einem für diesen Zweck ausgelegten Korb angeordneten Flaschen mit Saugern auf einem Förderer zum Transport des Korbs durch eine Flaschenwaschanlage platziert werden, wobei
die Sauger (16) auf allen Flaschen (17) in dem Korb in einem Vorgang von den Flaschen entfernt werden, indem an jedem Sauger (16) ein Mundstück (9) dichtend angebracht wird, woraufhin die Sauger mittels eines Druckluftstoßes durch das Mundstück von der jeweiligen Flasche entfernt werden und dann von den Flaschen abgehoben werden,
der Korb mit den in dem Korb gehaltenen Flaschen (17) mit der Oberseite nach unten umgedreht wird,
die Sauger (16) auf der Rückseite des Korbs platziert werden, der Korb in eine Waschmaschine (3) eingesetzt wird, in der Flaschen und Sauger gewaschen und getrocknet werden,
die Sauger (16) von dem Korb abgehoben werden,
der Korb wieder zurück in die ursprüngliche Position gedreht wird, wobei die Flaschen (17) ihre Flaschenöffnungen oben haben,
die Flaschen (17) mit einer Flüssigkeit befüllt werden und dann die Sauger (16) an den Flaschen (17) angebracht werden.

2. Verfahren nach Anspruch 1, wobei die Flüssigkeit Wasser ist.

3. Verfahren nach einem der Ansprüche 1 oder 2, wobei die Trinkflasche eine Trinkflasche für ein Labortier ist.

4. Mittel zur Handhabung von Trinkflaschen (17), die mit Saugern (16) versehen sind, in einer automatischen Flaschenwaschanlage, umfassend ein Saugerentfernungsmittel (2) und ein Saugerwiederanbringungsmittel (4), wobei das Saugerentfernungsmittel (2) eine Anzahl von Werkzeugen (6) aufweist, die der Anzahl von Trinkflaschen (17) in einem Korb entspricht, wobei die Werkzeuge (6) solcherart angeordnet sind, dass jedes Werkzeug mit einem Sauger (16) auf einer der Flaschen in dem Korb in Eingriff gebracht werden kann, ein Mittel zum Umdrehen des Korbs mit der Oberseite nach unten, wobei eine Rückseite des Korbs dafür angeordnet ist, die Sauger (16) während des Waschens und Trocknens zu enthalten, und Mittel zum Einbringen des Korbs in eine Waschmaschine (3), und wobei das Saugerwiederanbringungsmittel (4) Werkzeuge (6) aufweist, die den Werkzeugen (6) des Saugerentfernungsmittels (2) für Eingriff mit den und Anheben der Sauger (16) von der Rückseite des Korbs entsprechen, und zum Anbringen der Sauger an den Flaschen (17), ein Mittel zum Umdrehen des Korbs und ein Mittel zum Befüllen der Flaschen mit einer Flüssigkeit vor der Anbringung der Sauger.

5. Mittel nach Anspruch 4, **dadurch gekennzeichnet, dass** jedes Werkzeug (6) ein Mundstück (9) umfasst, das dafür ausgelegt ist, in dichtenden Eingriff mit einer Ausgussröhre (15) eines Saugers (16) gebracht zu werden.

6. Mittel nach Anspruch 5, **dadurch gekennzeichnet, dass** das Mundstück (9) mit einer Druckluftquelle verbunden ist.

7. Mittel nach Anspruch 5, **dadurch gekennzeichnet, dass** das Werkzeug (6) eine hohle Spindel (7) umfasst, die mit der Hilfe eines Betriebszylinders in axiale Richtungen zwischen einer oberen und einer unteren Endposition bewegbar ist, wobei ein Verbindungsstück (8) für eine Druckluftquelle an einem Ende der Spindel angeordnet ist und das Mundstück (9) an dem anderen Ende davon angeordnet ist.

8. Mittel nach Anspruch 5, **dadurch gekennzeichnet, dass** eine Dichtung in dem Mundstück (9) angeordnet ist, beispielsweise ein O-Ring, der eine in das Mundstück (9) eingeführte Ausgussröhre (15) umgibt und dadurch dafür angeordnet ist, einen ausreichenden Druck auf die Ausgussröhre aufzubringen, um die Ausgussröhre (15) und den zugehörigen Sauger (16) zurückzuhalten, wenn der Sauger von einer Trinkflasche (17) gelöst wurde.

9. Mittel nach Anspruch 7 oder 8, **dadurch gekennzeichnet, dass** das Werkzeug (6) Anschläge (11, 12) mit Anschlagflächen (13, 14) umfasst, die sich im Wesentlichen auf der Höhe einer unteren Kante des Mundstücks (9) befinden, wenn die Spindel (7) in ihrer unteren Endposition ist, wodurch das Mundstück (9) durch axiale Bewegung der Spindel (7) von ihrer unteren Endposition hin zu ihrer oberen Endposition von einem Sauger (16) gelöst werden kann.

10. Mittel nach einem der Ansprüche 4-9, wobei die Trinkflasche eine Trinkflasche für ein Labortier ist.

## Revendications

1. Procédé pour la manipulation de bouteilles à boire (17) pourvues de tétines (16) dans une ligne de lavage automatique de bouteilles, dans lequel les bouteilles avec les tétines, disposées dans un panier prévu à cet effet, sont placées sur un transporteur en vue du transport dudit panier à travers une ligne de lavage de bouteilles,
procédé suivant lequel les tétines (16) sur toutes les bouteilles (17) dans le panier sont retirées des bouteilles en une opération par fixation de manière étanche d'un embout (9) sur chaque tétine (16), sur quoi les tétines sont retirées de la bouteille respective par un soufflage d'air comprimé à travers ledit embout, et sont soulevées des bouteilles,
le panier est retourné avec les bouteilles (17) retenues dans le panier,
les tétines (16) sont placées sur le côté arrière du panier, le panier est introduit dans une machine de lavage (3) dans laquelle les bouteilles et les tétines sont lavées et séchées,
les tétines (16) sont soulevées du panier,
le panier est retourné dans la position d'origine avec les bouteilles (17) ayant leur embouchure de bouteille vers le haut,
les bouteilles (17) sont remplies par un liquide, puis les tétines (16) sont fixées sur les bouteilles (17).

2. Procédé selon la revendication 1, dans lequel ledit liquide est de l'eau.

3. Procédé selon l'une quelconque des revendications 1 ou 2, dans lequel ladite bouteille à boire est une bouteille à boire pour animaux de laboratoire.

4. Dispositif pour la manipulation de bouteilles à boire (17) pourvues de tétines (16) dans une ligne de lavage automatique de bouteilles, comprenant un moyen (2) de retrait des tétines et un moyen (4) de réassemblage des tétines, le moyen (2) de retrait des tétines ayant un nombre d'outils (6) correspondant au nombre de bouteilles à boire (17) dans un panier, les outils (6) étant disposés d'une manière telle que chaque outil peut être amené en engagement avec une tétine (16) sur l'une des bouteilles dans le panier, un moyen pour retourner le panier, un côté arrière du panier étant agencé pour contenir les tétines (16) pendant le lavage et le séchage, et un moyen pour introduire le panier dans une machine à laver (3), et dans lequel le moyen (4) de réassemblage des tétines a des outils (6) correspondant aux outils (6) du moyen (2) de retrait des tétines pour un engagement avec les tétines (16) et le soulèvement de celles-ci à partir du côté arrière du panier, et la fixation des tétines sur les bouteilles (17), un moyen pour tourner le panier et un moyen pour remplir les bouteilles par un liquide avant la fixation des tétines.

5. Dispositif selon la revendication 4, **caractérisé par le fait que** chaque outil (6) comprend un embout (9) qui est agencé pour être amené en engagement de scellement étanche avec une tubulure (15) d'une tétine (16).

6. Dispositif selon la revendication 5, **caractérisé par le fait que** l'embout (9) est relié à une source d'air comprimé.

7. Dispositif selon la revendication 5, **caractérisé par le fait que** l'outil (6) comprend une broche creuse (7) qui est déplaçable dans des directions axiales entre des positions d'extrémité supérieure et inférieure à l'aide d'un cylindre d'actionnement, un raccordement (8) pour une source d'air comprimé étant disposé à l'une des extrémités de la broche, et l'embout (9) étant disposé à l'autre extrémité de celle-ci.

8. Dispositif selon la revendication 5, **caractérisé par le fait qu'**un joint d'étanchéité est disposé dans l'embout (9), tel qu'un joint torique, lequel entoure une tubulure (15) introduite dans l'embout (9) et, par là, est agencé pour appliquer une pression suffisante contre la tubulure pour retenir la tubulure (15) et la tétine associée (16), lorsque la tétine a été libérée d'une bouteille à boire (17) .

9. Dispositif selon l'une des revendications 7 ou 8, **caractérisé par le fait que** l'outil (6) comprend des butées (11, 12) avec des surfaces de butée (13, 14) situées sensiblement au niveau d'un bord inférieur de l'embout (9), lorsque ladite tige (7) est dans sa position d'extrémité inférieure, ce par quoi l'embout (9) peut être libéré d'une tétine (16) par un mouvement axial de la broche (7) de sa position d'extrémité inférieure vers sa position d'extrémité supérieure.

10. Dispositif selon l'une quelconque des revendications 4 à 9, **caractérisé par le fait que** ladite bouteille à boire est une bouteille à boire pour animaux de laboratoire.
